Europäisches Patentamt

European Patent Office

Office européen des brevets

(19)

(11) Numéro de publication: **0 326 486**
A1

# (12) DEMANDE DE BREVET EUROPEEN

(21) Numéro de dépôt: 89400212.0

(22) Date de dépôt: 26.01.89

(51) Int. Cl.⁴: **B 01 J 8/02**
F 25 B 17/08, C 09 K 5/00

(30) Priorité: 29.01.88 FR 8801029

(43) Date de publication de la demande:
02.08.89 Bulletin 89/31

(84) Etats contractants désignés:
AT BE CH DE GB IT LI LU NL SE

(71) Demandeur: **SOCIETE NATIONALE ELF AQUITAINE**
**Tour Elf 2 Place de la Coupole La Défense 6**
**F-92400 Courbevoie (FR)**

(72) Inventeur: **Roca, Alain**
**3, rue Lafayette**
**F-66000 Perpignan (FR)**

**Mauran, Sylvain**
**Rue Nationale Espira de l'Agly**
**F-66000 Rivesaltes (FR)**

**Spinner, Bernard**
**23, Avenue Joffre Corneilla del Vercol**
**F-66200 Elne (FR)**

(74) Mandataire: **Timoney, Ian Charles Craig**
**SOCIETE NATIONALE ELF AQUITAINE Departement**
**Propriété Industrielle Tour Elf Cedex 45**
**F-92078 Paris La Défense (FR)**

(54) Procédé d'amélioration des caractéristiques d'absorption et de désorption d'un gaz par un milieu réactionnel.

(57) La présente invention concerne un procédé d'amélioration des caractéristiques d'absorption et de désorption d'un gaz par un milieu réactionnel constitué de plusieurs sels sous forme pulvérulente et d'un produit solide poreux, caractérisé en ce qu'il consiste à mélanger entre 0 et 60 % en masse du produit poreux avec le ou les sels pulvérulents, le produit poreux étant constitué d'un mélange de graphite expansé et d'un deuxième produit expansé de structure rigide et de forte perméabilité.

FIG_3

EP 0 326 486 A1

## Description

## PROCEDE D'AMELIORATION DES CARACTERISTIQUES D'ABSORPTION ET DE DESORPTION D'UN GAZ PAR UN MILIEU REACTIONNEL

La présente invention concerne un procédé d'amélioration des caractéristiques d'absorption et de désorption d'un gaz par un milieu réactionnel et le milieu réactionnel ainsi obtenu pour les applications à des pompes à chaleur chimique.

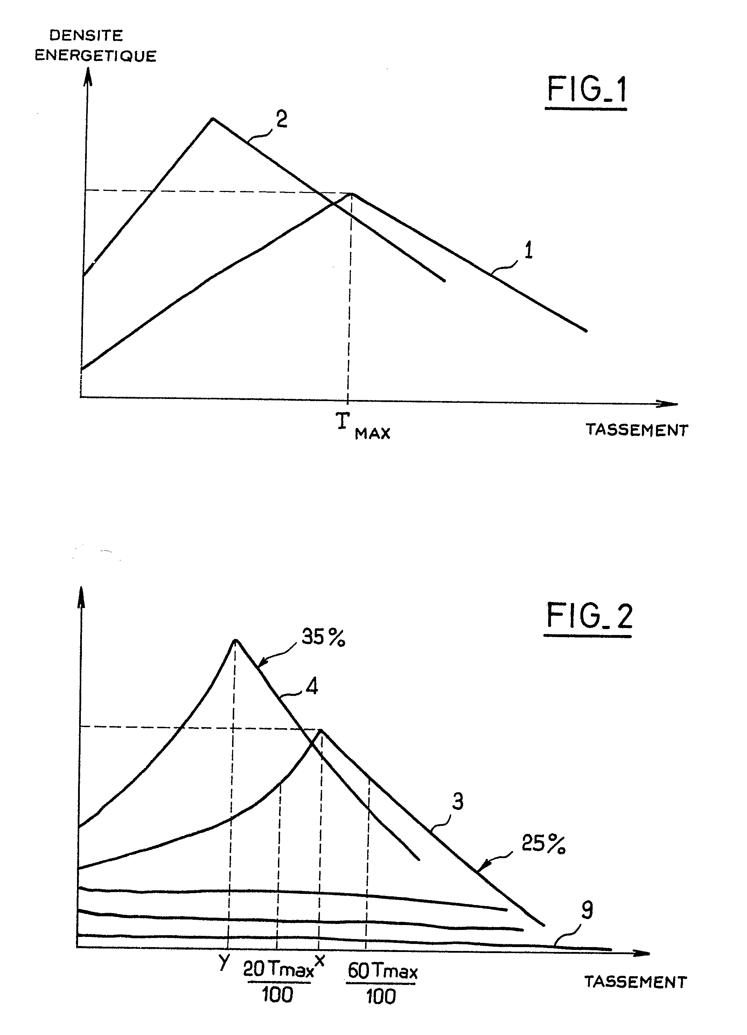

Il est connu par la demande de brevet 87 12389 déposée au nom de la Société ELF AQUITAINE le 7 Septembre 1987, un procédé de constitution d'un milieu réactionnel pour conduite de réaction d'absorption et de désorption dans une pompe à chaleur chimique. Ce procédé enseigne les pourcentages de tassement d'un sel par rapport au tassement optimal du sel en fonction du pourcentage en masse du produit réactionnel d'un produit poreux, qui permet d'obtenir une optimisation des densités énergétiques du milieu réactionnel. Ainsi, un tassement maximum (Tmax, fig. 1) permet d'obtenir une densité énergétique maximale en fonction d'un sel donné (1). Cette valeur est appelée tassement optimal de la réaction sans graphite et exprime l'énergie maximum que l'on peut introduire dans un système de stockage chimique utilisant un sel et un gaz. A un premier sel, représenté par la courbe (1) sur la figure 1, correspond une densité énergétique maximale et un tassement maximum et, à un deuxième sel, représenté par la courbe (2), correspond d'autres valeurs de tassement et de densité énergétique. Dans la demande ci-dessus, on a recherché, pour des milieux réactionnels constitués de graphite expansé et d'un ou plusieurs sels, les pourcentages (X, Y, fig. 2) de tassement optimal qui, en fonction du pourcentage de graphite expansé, permettaient d'obtenir un milieu réactionnel dont la zone de fonctionnement se situait dans les densités énergétiques et puissances intéressantes pour des applications de stockage et de déstockage de chaleur. Ainsi, comme on peut le voir à la figure 2, pour un milieu réactionnel représenté par la courbe (3) constitué par un mélange de sel avec 25 % en masse de graphite expansé, on obtient pour un pourcentage donné X de tassement optimal, une puissance massique maximale. Comme on l'a exprimé dans la demande de brevet ci-dessus, pour une valeur de tassement exprimée en nombre de kilos de mélange par m³ comprise entre 20 % et 60 % du tassement optimal de la réaction sans graphite, il est constaté que l'on reste dans les zones de puissance massique élevées et utilisables pour des réactions de stockage et déstockage de chaleur. De même, pour un milieu réactionnel représenté par la courbe (4) comportant 35 % en masse de graphite expansé, on a pu établir que le tassement du sel devait être choisi entre 15 et 50 % du tassement optimal. Nous rappellerons par ailleurs que le graphite expansé est utilisé en tant que bon conducteur thermique et pour sa porosité qui facilite le passage du gaz de réaction dans le milieu réactionnel au cours de la réaction d'absorption ou de désorption. Ceci est important car les halogénures métalliques ou alcalino-terreux utilisés comme sel sont mauvais conducteurs. De plus, ces sels se mettent à gonfler lorsqu'ils réagissent avec un gaz tel que, par exemple, de l'ammoniac ou de la méthylamine réagissant avec du chlorure de calcium.

Toutefois, comme on peut le constater sur les courbes de la figure 2, la puissance dépend énormément du tassement et varie très rapidement en fonction de ce dernier. Ce phénomène, lié au phénomène de gonflement du sel qui peut provoquer une obturation du milieu réactionnel dans le réacteur thermochimique est un inconvénient majeur.

Un but de l'invention est de proposer un procédé d'amélioration des caractéristiques d'absorption ou de désorption d'un gaz par un milieu réactionnel pour les rendre relativement indépendantes du tassement du milieu réactionnel.

Ce but est atteint par le fait que le procédé d'amélioration des caractéristiques d'absorption et de désorption d'un gaz par un milieu réactionnel, constitué d'un ou plusieurs sels sous forme pulvérulente et d'un produit solide poreux, consiste à mélanger entre 0 et 60 % en masse du produit poreux avec le ou les sels pulvérulents, le produit poreux étant constitué d'un mélange de graphite expansé et d'un deuxième produit expansé de structure rigide et de forte perméabilité.

Selon une autre caractéristique, le deuxième produit expansé est obtenu à partir d'un minérau lamellaire hydraté exfolié.

Selon une caractéristique avantageuse, le deuxième produit expansé est de la vermiculite.

Selon une autre caractéristique, le deuxième produit est de la perlite.

Selon un mode préféré, pour un pourcentage en masse de produit poreux égal à 25 % du milieu réactionnel, ce dernier comprend 20 % de graphite expansé et 5 % du deuxième produit.

Selon un autre mode préféré, pour un pourcentage en masse du produit poreux égal à 35 % du milieu réactionnel, le produit poreux comprend 25 % de graphite expansé et 10 % du deuxième produit.

Selon un autre mode, le tassement du ou des sels est supérieur à 60 % du tassement optimal.

Un autre but de l'invention est de proposer un procédé d'amélioration valable également pour des valeurs de tassement peu élevées.

Ce but est atteint par le fait que dans le procédé les sels pulvérulents sont, préalablement au mélange, tamisés pour présenter une granulométrie plus homogène.

Selon un mode d'exécution avantageux, la granulométrie est inférieure à 100 microns.

Selon ce mode d'exécution, le tassement du ou des sels est inférieur à 40 %.

Ce dernier but de l'invention est de proposer une utilisation du procédé.

Ce but est atteint par le fait que le milieu réactionnel obtenu selon le procédé est utilisé dans des pompes à chaleur chimique.

D'autres caractéristiques et avantages de la présente invention apparaîtront plus clairement à la lecture de la description ci-après, faite en référence aux dessins annexés dans lesquels :

- la figure 1 représente les courbes d'évolution de la densité énergétique de deux sels différents, en fonction du tassement ;
- la figure 2 représente les courbes d'évolution de la puissance massique d'un milieu réactionnel constitué d'un mélange de sel et de graphite expansé, selon des proportions variables, en fonction du tassement du mélange ;
- la figure 3 représente la courbe de puissance par kilo du milieu réactionnel en fonction du tassement du mélange, pour des milieux réactionnels obtenus selon le procédé de l'invention;
- la figure 4 représente les courbes de puissance par kilo du milieu réactionnel en fonction du tassement du mélange pour des tassements inférieurs au tassement de densité énergétique maximal.

Dans l'art antérieur au brevet, représenté à la figure 2, pour un milieu réactionnel correspondant à un mélange de 25 % de graphite expansé en masse du milieu, la puissance massique passe par un maximum pour un pourcentage X de la valeur de tassement optimal. De même, pour un milieu réactionnel correspondant à un mélange de 35 % de graphite expansé en masse du milieu, la courbe de puissance massique du mélange, en fonction du tassement, passe par un maximum pour un pourcentage Y de la valeur de tassement optimal, le tassement correspondant au nombre de kilos du mélange par m$^3$.

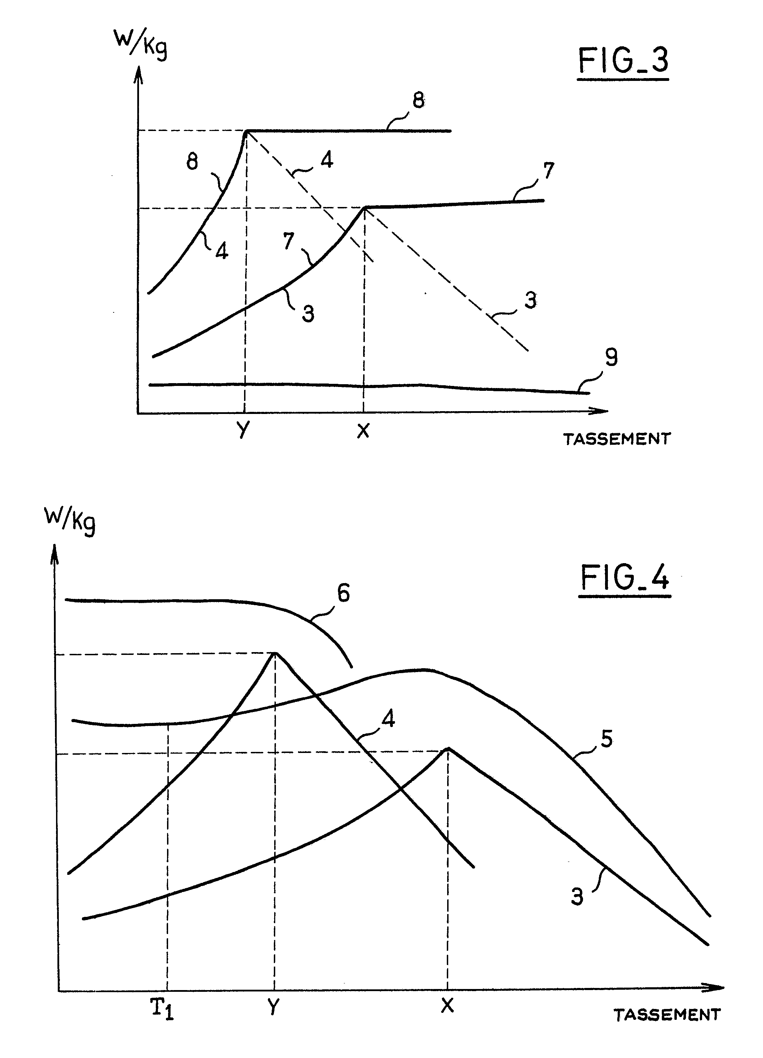

De façon surprenante, on a constaté qu'en prenant pour milieu réactionnel un mélange constitué d'un sel pulvérulent et de produit poreux contenant dans une certaine proportion du graphite expansé et un deuxième produit expansé de structure rigide et de forte perméabilité, les puissances massiques du milieu réactionnel devenaient indépendantes du tassement pour des valeurs de tassement supérieures aux pourcentages X, Y correspondant au maximum de densité énergétique pour un mélange graphite, expansé, sel. Ainsi, la courbe 3 de la figure 3 représente pour un milieu réactionnel, constitué de 25 % de graphite expansé et de sel, la puissance massique de ce milieu réactionnel en fonction du tassement. La courbe 4 représente la puissance massique d'un milieu réactionnel constitué de 35 % de graphite mélangé à un sel, la courbe 9 représente la puissance massique du sel sans addition de graphite. Enfin, les courbes 7 et 8 représentent les puissances massiques moyennes pour une réaction allant de zéro à 70 % de la réaction totale d'un milieu réactionnel constitué d'un mélange de 25 %, respectivement 35 % de produit poreux avec du sel, le produit poreux étant constitué d'un mélange de graphite expansé et d'un deuxième produit expansé de structure rigide et de grande perméabilité. De façon surprenante, on constate que pour les valeurs de tassement correspondant aux densités énergétiques maximales pour un mélange graphite, sel dans des proportions données, le mélange selon le procédé d'amélioration du milieu réactionnel garde une puissance massique constante indépendante du tassement alors que pour les valeurs inférieures aux pourcentages X, Y, ces puissances massiques suivent les valeurs du mélange graphite sel.

De façon avantageuse, on utilisera comme produit expansé des produits obtenus à partir de minéraux lamellaires hydratés exfoliés. Ces produits peuvent être notamment de la vermiculite, de la perlite ou des produits obtenus par exfoliation, et en particulier à partir d'oxydes type $SiO_2$, $Al_2O_3$ (argiles). Le groupe des kandites (épaisseur de feuillet de 7 A°) et des illites (épaisseur de feuillet de 10 A°) est moins intéressant que les smectites et que le groupe de la vermiculite (épaisseur des feuillets de 14,5 à 15 A°). Seuls les vermiculites ont la propriété de s'expanser de manière aussi considérable, un produit de type zéolithe permettant (sans exfoliation une grande perméabilité et une structure rigide. Pour un pourcentage de 35 % en masse de produit poreux, on utilisera 25 % de graphite expansé et 10 % du deuxième produit alors que pour un pourcentage de 25 % du produit poreux, on utilisera 20 % de graphite et 5 % du deuxième produit. Comme la puissance massique du milieu réactionnel est directement liée aux caractéristiques d'absorption et de désorption entre un gaz et le milieu réactionnel, on comprend bien évidemment l'intérêt de cet additif en produit poreux pour le milieu réactionnel.

Les domaines à forts tassements, soit une grande quantité de sel réactif contenue dans un volume minimum, sont en particulier importants pour le fonctionnement de pompes à chaleur où la fonction stockage est recherchée.

Toutefois, ce milieu réactionnel présente encore l'inconvénient pour les valeurs de tassement inférieures aux pourcentages X, Y de tassement donnant les puissances massiques maximales de présenter une puissance massique variable en fonction du tassement.

De façon également surprenante, on a constaté par l'expérience qu'en contrôlant la granulométrie du sel mélangé au graphite expansé, on arrivait à modifier la puissance massique du mélange pour les tassements faibles dans un facteur de 1 à 7. Ainsi, la courbe 3 de la figure 4 représente la variation de la puissance massique d'un milieu réactionnel à base de sel pulvérulent contenant 25 % de graphite, quelle que soit sa granulométrie, la courbe 5 représente la variation de la puissance massique d'un milieu réactionnel obtenu à partir d'un mélange dans les mêmes proportions avec un sel, préalablement tamisé, pour présenter une granulométrie homogène inférieure à 100 microns. Dans le cas de la courbe 3, le sel présente une granulométrie variant de 20 microns à 1,5 mm. Pour la courbe 5, on constate que pour un mélange obtenu avec un pourcentage de tassement T1, la puissance massique est plusieurs fois supérieure à la puissance massique du mélange avec une granulométrie variable représenté par la courbe 3. De même, pour un milieu réactionnel constitué d'un mélange comportant 35 % de produit poreux, on obtient une courbe de puissance massique pratiquement constante jusqu'au maximum correspondant au pourcentage Y de tassement, puis une diminution de cette puissance en fonction de l'accroissement du tassement. Pour un pourcentage de mélange de l'ordre de 25 %, la courbe 5 présente pour les pourcentages de tassement inférieurs à la valeur X, une puissance croissante jusqu'à un maximum. Ensuite, cette puissance se met à décroître en fonction du tassement pour les valeurs au-delà de X. Par ce procédé de mélange d'un produit de granulométrie donnée, on accroît la puissance massique ou la puissance volumique. Or ce sont les plus fortes puissances massiques ou volumiques qui sont recherchées dans le cas des pompes à chaleur industrielles.

En réalité, en fonction des applications pratiques visées, on recherchera un compromis technico-économique entre le coût des réactifs pour le volume disponible par rapport à la puissance souhaitée et la surface d'échange.

Ainsi, par un procédé faisant appel à un milieu réactionnel utilisant un produit poreux additionnel, en plus du graphite expansé, et en calibrant la granulométrie du sel utilisé dans le mélange, on arrive à obtenir un milieu réactionnel dont la puissance massique reste pratiquement indépendante du tassement du mélange.

D'autres modifications à la portée de l'homme de métier font également partie de l'esprit de l'invention.


## Revendications

1 - Procédé d'amélioration des caractéristiques d'absorption et de désorption d'un gaz par un milieu réactionnel constitué de plusieurs sels sous forme pulvérulente et d'un produit solide poreux, caractérisé en ce qu'il consiste à mélanger entre 0 et 60 % en masse du produit poreux avec le ou les sels, pulvérulents, le produit poreux étant constitué d'un mélange de graphite expansé et d'un deuxième produit expansé de structure rigide et de forte perméabilité.

2 - Procédé selon la revendication 1, caractérisé en ce que le deuxième produit expansé est obtenu à partir de minéraux lamellaires hydratés exfoliés.

3 - Procédé selon la revendication 1 ou 2, caractérisé en ce que le deuxième produit expansé est de la vermiculite.

4 - Procédé selon la revendication 1 ou 2, caractérisé en ce que le deuxième produit est de la perlite.

5 - Procédé selon la revendication 3 ou 4, caractérisé en ce que pour un pourcentage en masse de produits poreux égal à 25 % du milieu réactionnel, le produit poreux comprend 20 % de graphite expansé et 5 % du deuxième produit.

6 - Procédé selon la revendication 5, caractérisé en ce que le tassement du ou des sels est supérieur à 60 % du tassement optimal.

7 - Procédé selon la revendication 3 ou 4, caractérisé en ce que pour un pourcentage en masse du produit poreux égal à 35 % du milieu réactionnel, le produit poreux comprend 25 % de graphite expansé et 10 % du deuxième produit.

8 - Procédé selon la revendication 7, caractérisé en ce que le tassement du ou des sels est supérieur à 50 % du tassement optimal.

9 - Procédé selon une des revendications précédentes, caractérisé en ce que le ou les sels pulvérulents sont tamisés préalablement au mélange pour présenter une granulométrie plus homogène.

10 - Procédé selon la revendication 9, caractérisé en ce que la granulométrie est inférieure à 100 microns.

11 - Procédé selon la revendication 10, caractérisé en ce que le tassement du ou des sels est inférieur à 40 %.

12 - Milieu réactionnel obtenu selon le procédé d'une des revendications précédentes, caractérisé en ce qu'il est appliqué dans des pompes à chaleur chimique.

13 - Procédé selon la revendication 1 ou 2, caractérisé en ce que le deuxième produit appartient au groupe des smectites.

14 - Procédé selon la revendication 1 ou 2, caractérisé en ce que le deuxième produit appartient au groupe des zéolithes.

15 - Procédé selon la revendication 1 ou 2, caractérisé en ce que le deuxième produit appartient au groupe des kandites.

16 - Procédé selon la revendication 1 ou 2, caractérisé en ce que le deuxième produit appartient au groupe des illites.

FIG_1

DENSITE
ENERGETIQUE

T_MAX

TASSEMENT

FIG_2

35%

4

3

25%

9

Y  $\dfrac{20\,Tmax}{100}$  X  $\dfrac{60\,Tmax}{100}$

TASSEMENT

FIG_3

FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 547 512  (ELF AQUITAINE) ----- | | B 01 J    8/02 <br> F 25 B   17/08 <br> C 09 K    5/00 |

DOMAINES TECHNIQUES
RECHERCHES (Int. Cl.4)

B 01 J
F 25 B
C 09 K

Le présent rapport a été établi pour toutes les revendications

| Lieu de la recherche | Date d'achèvement de la recherche | Examinateur |
|---|---|---|
| LA HAYE | 20-04-1989 | BOGAERTS M.L.M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P0402)